# EUROPEAN PATENT APPLICATION

(11) **EP 4 818 747 A1**
(43) Date of publication of application: **07.10.2026**
(21) Application number: 26168096.1
(22) Date of filing: 26.03.2026
(51) Int. Cl.: G01S 7/481, G01S 7/4865, G01S 7/4914, G01S 17/89

(54) **A SIGNAL RECEIVING APPARATUS, A SIGNAL PROCESSING METHOD, AND A RADAR SYSTEM**

(30) Priority: 31.03.2025 CN 202510400820
(71) Applicant: Suteng Innovation Technology Co., Ltd., Shenzhen, Guangdong 518000 (CN)
(72) Inventor: Gong, Changsheng, Shenzhen, 518000 (CN)
(74) Representative: RGTH

(57) **Abstract**

The present application provides a signal receiving apparatus, including: a photosensitive array; a data selection module, connected to the photosensitive array, configured to determine target pixels for outputting sampled data in each scan according to a current scanning mode of the radar system, and transmit the sampled data output by the target pixels to an operation processing module; and the operation processing module, connected to the data selection module, configured to process and compute the sampled data output by the target pixels to obtain pixel detection results corresponding to the target pixels. By arranging pixels differently in the photosensitive array under different scanning modes, point clouds obtained through multiple scans can meet requirements such as equal-resolution distribution, high-resolution detection in specified regions, and high detection performance in specified regions. This achieves improved resolution in specified regions, enhanced ranging capability and detection rate in specified regions, while using less computational resources.

## Description

### TECHNICAL FIELD

The present application belongs to the technical field of radar, and particularly relates to a signal receiving apparatus, a method, and a radar system.

### BACKGROUND

LIDAR (Light Detection and Ranging) is a radar system that emits laser beams to detect information such as the position and velocity of a target. In addition to detecting the distance of objects, it can also detect the reflectivity of objects for target identification.

The resolution (or number of lines) and ranging capability of a LIDAR are important performance metrics. When the number of photosensitive elements in the receiving device is fixed, improving the radar's resolution and ranging capability typically requires configuring more processing units in the data processing module. This undoubtedly necessitates the use of more processing resources, which can easily lead to higher power consumption.

Therefore, how to achieve improved resolution, enhanced ranging capability, and an increased detection rate in specified areas while using fewer computing resources is a problem that urgently needs to be solved.

### SUMMARY

Embodiments of the present application provide a signal receiving apparatus, a signal processing method, and a radar system, which can achieve improved resolution in a specified area, enhanced ranging capability, and an increased detection rate for the specified area while using fewer computing resources.

In a first aspect, an embodiment of the present application provides a signal receiving apparatus, comprising:
a photosensitive array, wherein the photosensitive array comprises a plurality of photosensitive elements, groups of photosensitive elements in the photosensitive array form pixels, each pixel comprises one or more photosensitive elements; the pixels receive echo light beams through internal photosensitive elements and output corresponding sampling data;
a data selection module, connected to the photosensitive array, configured to determine target pixels for outputting sampling data in each scanning operation according to a current scanning mode of a radar system; and transmit the sampling data output by the target pixels to a computing and processing module; wherein the number of the target pixels is less than the number of pixels in the photosensitive array, and the number of the target pixels is determined according to the current scanning mode;
the computing and processing module, connected to the data selection module, configured to process and compute the sampling data output by the target pixels to obtain pixel detection results corresponding to the target pixels; wherein, in each scanning operation, the data selection module only selects sampling data output by a portion of the pixels in the photosensitive array to be transmitted to the computing and processing module.

In an implementation of the first aspect, the computing and processing module comprises a plurality of computing and processing units, and the number of the computing and processing units is less than the number of pixels in the photosensitive array.

In an implementation of the first aspect, the data selection module comprises a data selector array, the data selector array comprises a plurality of data selectors, each of the data selectors selects to turn on or turn off a data transmission path between a pixel and the computing and processing module according to the current scanning mode of the radar system.

In an implementation of the first aspect, the number of photosensitive elements in the group of photosensitive elements corresponding to a pixel in an edge detection area is less than the number of photosensitive elements in the group of photosensitive elements corresponding to a pixel in a center detection area.

In an implementation of the first aspect, the scanning mode of the radar system comprises:
controlling the radar system to perform cyclic scanning, wherein in each scanning operation, only pixels within a selected area are activated for scanning, the activated pixels within the selected area acquire corresponding sampling data, and pixels within a non-selected area are not activated; within each cyclic scanning round, selected areas activated in different scanning operations do not overlap, and the selected areas activated in different scanning operations within the cyclic scanning round cover all pixel positions of a detection field of view.

In an implementation of the first aspect, within the cyclic scanning round, pixel positions in different scanning operations have an offset in a horizontal direction.

In an implementation of the first aspect, the scanning mode of the radar system comprises:
controlling the radar system to perform cyclic scanning, wherein in each scanning operation, only pixels within a selected area are activated for scanning, the activated pixels within the selected area acquire corresponding sampling data, and pixels within a non-selected area are not activated; within each cyclic scanning round, selected areas activated in different scanning operations partially overlap, the overlapping pixels in the overlapping area output corresponding sampling data in each scanning operation, and the selected areas activated in different scanning operations within the cyclic scanning round cover all pixel positions of a detection field of view.

In an implementation of the first aspect, within the cyclic scanning round, pixel positions in different scanning operations have an offset in a vertical direction.

In an implementation of the first aspect, the scanning mode of the radar system comprises:
controlling the radar system to perform cyclic scanning, wherein in each scanning operation, only pixels within a selected area are activated for scanning, the activated pixels within the selected area acquire corresponding sampling data, and pixels within a non-selected area are not activated; within each cyclic scanning round, selected areas activated in different scanning operations partially overlap, the overlapping pixels in the overlapping area output corresponding sampling data in each scanning operation, the number of photosensitive elements of the overlapping pixels is greater than the number of photosensitive elements of non-overlapping pixels, and the selected areas activated in different scanning operations within the cyclic scanning round cover all pixel positions of a detection field of view.

In an implementation of the first aspect, the number of photosensitive elements of the overlapping pixels in the vertical direction is greater than the number of photosensitive elements of the non-overlapping pixels in the vertical direction.

In a second aspect, an embodiment of the present application provides a signal processing method, applied to the signal receiving apparatus according to the first aspect or any implementation thereof, the signal processing method comprising:
determining target pixels for a current scanning operation according to a current scanning mode;
determining a pixel detection result for each of the target pixels according to sampling data of the target pixels; and
acquiring point cloud data of a detection area according to the pixel detection results obtained from multiple scanning operations.

In an implementation of the second aspect, different scanning modes are set for different detection areas, and the determining target pixels for a current scanning operation according to a current scanning mode comprises:
acquiring a scanning mode of a current detection area; and
determining the target pixels corresponding to the current scanning operation according to the scanning mode of the current detection area.

In an implementation of the second aspect, the determining a pixel detection result for each of the target pixels according to sampling data of the target pixels comprises:
determining a computing and processing unit corresponding to a target pixel according to a mapping relationship between the target pixels and the computing and processing units; and
inputting the sampling data output by the target pixel into the computing and processing unit corresponding to the target pixel for processing and calculation, to obtain the pixel detection result of the target pixel.

In a third aspect, an embodiment of the present application provides a radar system, comprising the signal receiving apparatus according to the first aspect or any implementation thereof.

In a fourth aspect, an embodiment of the present application provides a terminal device, the terminal device comprising a processor, a memory, and a computer program stored in the memory and executable on the processor, wherein the processor, when executing the computer program, implements the method according to the second aspect or any optional implementation thereof.

In a fifth aspect, an embodiment of the present application provides a computer-readable storage medium storing a computer program, wherein the computer program, when executed by a processor, implements the method according to the second aspect or any optional implementation thereof.

In a sixth aspect, an embodiment of the present application provides a computer program product, wherein when the computer program product runs on a terminal device, the terminal device is caused to execute the method according to the second aspect or any optional implementation thereof.

Beneficial effects of the embodiments of the present application compared with the prior art are as follows:
The signal receiving apparatus, signal processing method, radar system, terminal device, and computer-readable storage medium provided by the embodiments of the present application, by configuring different pixel arrangements in the photosensitive array for different scan groups across multiple scanning operations under different scanning modes, enable the point cloud obtained from multiple scans to meet requirements such as uniform resolution distribution, high-resolution detection in specified areas, and high detection performance in specified areas. This achieves improved resolution, enhanced ranging ability, and an increased detection rate in specified areas while using fewer computing resources.

### BRIEF DESCRIPTION OF DRAWINGS

To more clearly illustrate the technical solutions in the embodiments of the present application, the accompanying drawings required for describing the embodiments or the prior art will be briefly introduced below. Obviously, the drawings in the following description are merely some embodiments of the present application. For a person of ordinary skill in the art, other drawings can be obtained based on these drawings without creative effort.
FIG. 1 is a schematic diagram of an application scenario of a LIDAR system in an embodiment of the present application;
FIG. 2 is a structural schematic diagram of a LIDAR in an embodiment of the present application;
FIG. 3 is a structural schematic diagram of a signal receiving apparatus;
FIG. 4 is a schematic diagram illustrating a correspondence relationship among pixels, groups of photosensitive elements, and point cloud in an embodiment of the present application;
FIG. 5 is a possible structural schematic diagram of a photosensitive array in an embodiment of the present application;
FIG. 6 is a schematic diagram of photosensitive elements being activated along with scanning in scanning mode 1 provided by an embodiment of the present application;
FIG. 7 is a schematic diagram illustrating an offset in the horizontal direction of pixels being activated along with scanning in scanning mode 1 provided by an embodiment of the present application;
FIG. 8 is a point cloud distribution schematic diagram corresponding to scanning mode 1 provided by an embodiment of the present application;
FIG. 9 is another point cloud distribution schematic diagram obtained by scanning according to scanning mode 1 provided by an embodiment of the present application;
FIG. 10 is another point cloud distribution schematic diagram obtained by scanning according to scanning mode 1 provided by an embodiment of the present application;
FIG. 11 is another point cloud distribution schematic diagram obtained by scanning according to scanning mode 1 provided by an embodiment of the present application;
FIG. 12 is a schematic diagram of photosensitive elements being activated along with scanning in scanning mode 2 provided by an embodiment of the present application;
FIG. 13 is a schematic diagram of misalignment in starting positions of photosensitive elements of pixels in scanning mode 2 provided by an embodiment of the present application;
FIG. 14 is a schematic diagram illustrating an offset in the horizontal direction of pixels being activated along with scanning in scanning mode 2 provided by an embodiment of the present application;
FIG. 15 is a point cloud distribution schematic diagram corresponding to scanning mode 2 provided by an embodiment of the present application;
FIG. 16 is another point cloud distribution schematic diagram obtained by scanning according to scanning mode 2 provided by an embodiment of the present application;
FIG. 17 is another point cloud distribution schematic diagram obtained by scanning according to scanning mode 2 provided by an embodiment of the present application;
FIG. 18 is another point cloud distribution schematic diagram obtained by scanning according to scanning mode 2 provided by an embodiment of the present application;
FIG. 19 is a schematic diagram of photosensitive elements being activated along with scanning in scanning mode 3 provided by an embodiment of the present application;
FIG. 20 is a schematic diagram of positions of photosensitive elements corresponding to pixels in each scanning operation within a cyclic scanning round in scanning mode 3 provided by an embodiment of the present application;
FIG. 21 is a point cloud distribution schematic diagram obtained by scanning according to scanning mode 3 provided by an embodiment of the present application;
FIG. 22 is another point cloud distribution schematic diagram obtained by scanning according to scanning mode 3 provided by an embodiment of the present application;
FIG. 23 is another point cloud distribution schematic diagram obtained by scanning according to scanning mode 3 provided by an embodiment of the present application;
FIG. 24 is another point cloud distribution schematic diagram obtained by scanning according to scanning mode 3 provided by an embodiment of the present application;
FIG. 25 is a schematic flowchart of an implementation of a signal processing method provided by an embodiment of the present application;
FIG. 26 is a structural schematic diagram of a LIDAR receiving chip provided by an embodiment of the present application;
FIG. 27 is a structural schematic diagram of a terminal device provided by an embodiment of the present application;
FIG. 28 is a structural schematic diagram of a computer-readable storage medium provided by an embodiment of the present application.

### DETAILED DESCRIPTION

In the following description, to illustrate rather than to limit, specific details such as particular system structures and techniques are presented to provide a thorough understanding of the embodiments of the present application. However, it will be clear to those skilled in the art that the present application may be implemented in other embodiments without these specific details. In other instances, detailed descriptions of well-known systems, apparatuses, circuits, and methods are omitted to avoid obscuring the description of the present application with unnecessary details.

It should be understood that the term "and/or" used in the description and the appended claims of the present application refers to any combination and all possible combinations of one or more of the associated listed items, and includes these combinations. Additionally, in the description of the specification and the appended claims of the present application, terms such as "first", "second", and "third" are used only for distinguishing description and should not be construed as indicating or implying relative importance.

It should also be understood that references in the description of the present application to "one embodiment", "some embodiments", etc., mean that a particular feature, structure, or characteristic described in connection with the embodiment is included in at least one embodiment of the present application. Therefore, the phrases "in one embodiment", "in some embodiments", "in other embodiments", "in still other embodiments", etc., appearing in different places in this specification are not necessarily all referring to the same embodiment, but rather mean "one or more but not all embodiments", unless otherwise specifically emphasized differently. The terms "comprise", "include", "have" and their variants all mean "including but not limited to", unless otherwise specifically emphasized differently.

LIDAR (Light Detection and Ranging) is a radar system that emits laser beams to detect information such as the position and speed of a target. In addition to being able to detect the distance of an object, it can also detect the reflectivity of the object for target identification. The specific working principle of a LIDAR involves emitting a detection signal towards a target. After the detection signal reaches the target, it is reflected by the target object, thereby forming echo data. The LIDAR receives the signal (echo data) reflected by the target, and then can determine relevant information about the target, such as target distance, position, height, speed, attitude, shape, reflectivity, etc., based on the echo data, thereby achieving target detection, target tracking, and target recognition. The reflectivity of an object refers to the percentage of reflected radiation energy to the total radiation energy of the incident signal. Different objects have different reflectivities, which are mainly determined by factors such as the surface properties of the object, the wavelength of the incident signal, and the angle of incidence.

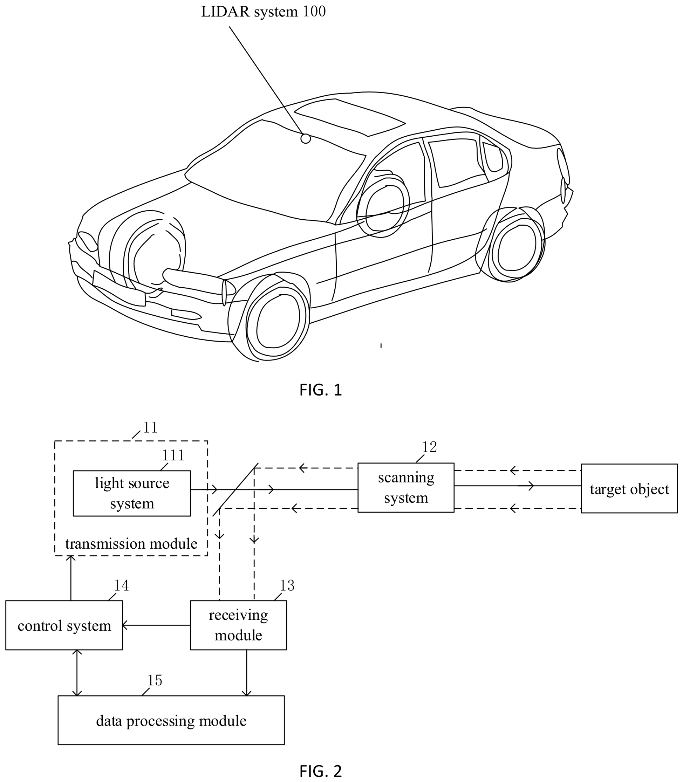

In a specific application scenario, FIG. 1 exemplarily shows a schematic diagram of an application scenario of a LIDAR system provided by an embodiment of the present application. In this example, the LIDAR system 100 can be installed on a vehicle, and is therefore referred to as a vehicle-mounted LIDAR system. The LIDAR can also be installed on other mobile devices, such as mobile robots or ships. The present application does not impose unique restrictions on the type of mobile device.

The LIDAR can be a mechanical LIDAR, a solid-state LIDAR, a hybrid solid-state LIDAR, etc. The present application does not impose unique restrictions on this.

In the present application, the LIDAR may include a control module and a data processing module. The control module is used to control the LIDAR to emit detection laser beams and to control the LIDAR to receive echo laser beams. The data processing module is used to process echo data received by the LIDAR and output corresponding detection data.

Exemplarily, please refer to FIG. 2, which shows a structural schematic diagram of a LIDAR. As shown in FIG. 2, a LIDAR 10 typically includes a transmission module 11, a scanning system 12, a receiving module 13, a control module 14, and a data processing module 15. The aforementioned transmission module 11 may include a light source system 111.

The light source system 111 is used to generate the laser beams required for detection by the LIDAR 10. Specifically, the light source system 111 may include optical components such as a laser and transmission lens group. The scanning system 12 is used to angularly deflect the laser beam generated by the light source system 111, so that the laser beam can strike different positions at different times. The scanning system 12 can be a mechanical scanning system (i.e., a rotating drive platform) or a hybrid solid-state scanning system (i.e., a rotating mirror, a vibrating mirror, or a combination of both). The present application does not impose unique restrictions on the form of the scanning system.

It is understandable that the LIDAR in the present application can also be a solid-state LIDAR, which implements scanning by controlling light sources at different angles to emit light sequentially. After the laser beam emitted by the light source system reaches the target object and is reflected by the target object, the reflected light pulse is received by the receiving sensor in the receiving module 13, and then processed by an echo signal processing circuit to generate corresponding detection information.

The control system 14 is used to control the LIDAR to emit detection laser beams and to control the LIDAR to receive echo laser beams. The data processing module 15 is used to process the echo data received by the LIDAR and output corresponding detection data.

The resolution (or number of lines) and ranging capability of a LIDAR are important performance metrics. When the number of photosensitive elements in the receiver device is fixed, to improve the radar's resolution and ranging capability, it is usually necessary to configure more processing units in the data processing module. This inevitably requires the use of more processing resources, which can easily result in higher power consumption.

Therefore, how to improve the resolution, ranging capability, and detection rate in a specified area while using fewer computing resources is a problem that urgently needs to be solved.

Based on this, embodiments of the present application provide a signal receiving apparatus, which can, by performing scanning in batches for groups of photosensitive elements and by combining the selection and positional offset of photosensitive elements corresponding to pixels, obtain point cloud images with different photosensitive element center positions. This achieves improved resolution, enhanced ranging capability, and an increased detection rate in specified areas while using fewer computing resources.

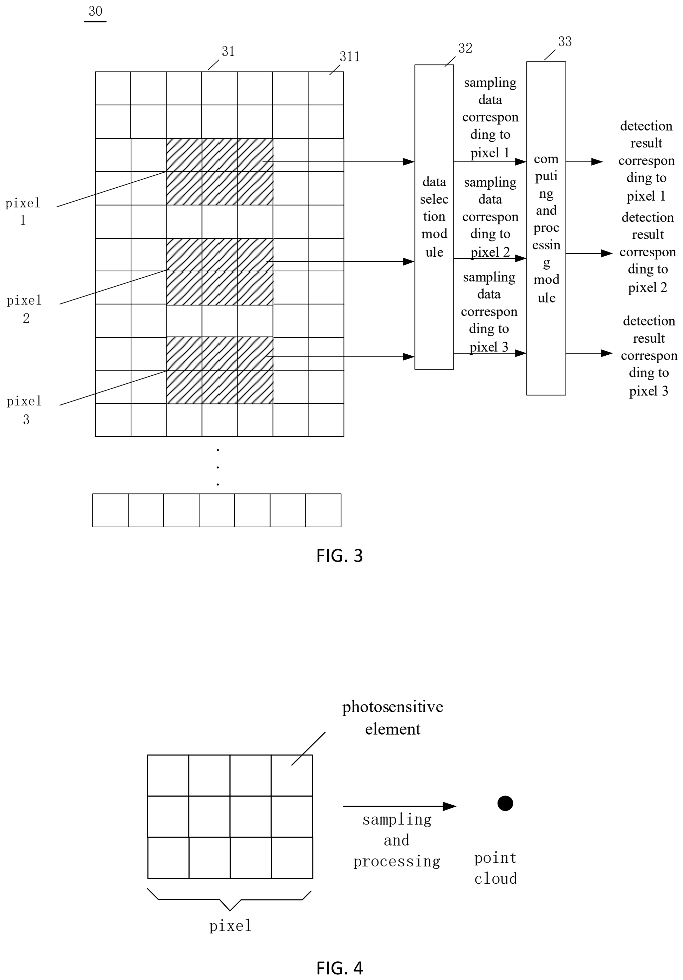

The following will provide a detailed description of the signal processing method provided by the embodiments of the present application:
Please refer to FIG. 3, which shows a structural schematic diagram of a signal receiving apparatus provided by an embodiment of the present application. As shown in FIG. 3, the aforementioned signal receiving apparatus 30 includes a photosensitive array 31, a data selection module 32, and a computing and processing module 33.

The aforementioned photosensitive array 31 is connected to the data selection module 32, and the data selection module 32 is connected to the computing and processing module 33.

In specific applications, as shown in FIG. 3, the aforementioned photosensitive array 31 includes a plurality of photosensitive elements 311. The plurality of photosensitive elements 311 are arranged in an array formation, and the photosensitive elements 311 are used to receive echo light beams and output corresponding sampling data.

Groups of photosensitive elements in the photosensitive array form pixels, each pixel includes one or more photosensitive elements. The pixels receive echo light beams through the internal photosensitive elements and output corresponding sampling data.

In specific applications, the aforementioned photosensitive elements 311 can be Silicon Photomultipliers (SiPM), Avalanche Photodiodes (APD), or Single Photon Avalanche Diodes (SPAD). The present application does not impose unique limitations on this.

In the embodiments of the present application, as shown in FIG. 4, a pixel can correspond to a group of photosensitive elements, and a group of photosensitive elements can include a number of photosensitive elements (one or more). After data sampling and processing operations, the point cloud corresponding to that pixel can be obtained.

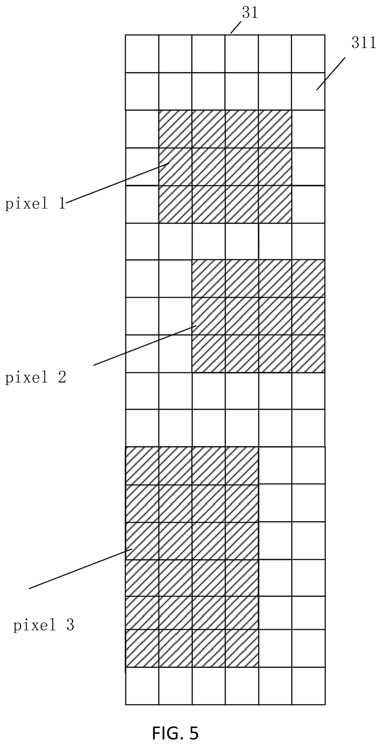

It should be noted that groups of photosensitive elements corresponding to different pixels can be selected in the vertical direction (V direction) and horizontal direction (H direction) of the aforementioned photosensitive array 31. The number of photosensitive elements in the group of photosensitive elements corresponding to different pixels can be adjusted according to application requirements. The number of photosensitive elements in the group of photosensitive elements corresponding to different pixels can be the same or different. FIG. 5 shows a possible structural schematic diagram of the photosensitive array 31. As shown in FIG. 5, the group of photosensitive elements corresponding to pixel 1 can include 3 * 4 photosensitive elements 311, and the group of photosensitive elements corresponding to pixel 2 can also include 3 * 4 photosensitive elements 311, meaning the number of photosensitive elements 311 in the group corresponding to pixel 2 is equal to that of pixel 1. The group of photosensitive elements corresponding to pixel 3 can include 6 * 4 photosensitive elements, meaning the number of photosensitive elements in the group corresponding to pixel 3 is not equal to the number of photosensitive elements 311 in the group corresponding to pixel 1.

It is understandable that the number of photosensitive elements in the group of photosensitive elements corresponding to a pixel in the edge detection area can be less than the number of photosensitive elements in the group of photosensitive elements corresponding to a pixel in the center detection area.

It should be noted that the center detection area of the radar's detection field of view refers to the central scanning area, i.e., the area where targets are more likely to exist and where more precise scanning is required. The edge detection area refers to the detection area in the field of view other than the center detection area, generally scanning angles closer to the sky or ground areas.

Among them, each pixel will perform independent photosensitive sampling (photosensitive sampling refers to receiving echo light beams and outputting corresponding sampling data) to obtain the sampling data corresponding to each pixel.

In specific applications, the aforementioned data selection module 32 is used to determine the target pixels corresponding to the sampling data to be input to the computing processor in each scan according to the current scanning mode of the radar system.

That is, the sampling data collected by the aforementioned multiple pixels will be transmitted to the data selection module 32 for selection. The data selection module 32 can determine the target pixels to be selected according to the current scanning mode of the radar system.

In the embodiments of the present application, the number of pixels in the photosensitive array 31 is greater than the number of pixel data corresponding to the input to the computing and processing module 33 through the aforementioned data selection module 32. In other words, in the design of the radar system, the number of the aforementioned target pixels is less than the number of pixels in the photosensitive array 31. In other words, the data selection module 32, in each scanning operation, will only select the sampling data output by a portion of the pixels to input to the computing and processing module 33. That is, the number of sampling data processed by the computing and processing module in each scanning operation is less than the number of pixels included in the aforementioned photosensitive array 31. The number of computing and processing units in the processing module is less than the number of pixels in the photosensitive array 31.

In related technologies, the number of sampling data processed by the computing and processing module in each scanning operation is equal to the number of pixels included in the photosensitive array. For example, if the number of pixels formed in the photosensitive array is 16, then the computing and processing module needs to be configured with 16 computing and processing units to process the sampling data output by these 16 pixels, and the number of pixel detection results obtained in a single measurement is also 16.

However, in the embodiments of the present application, the number of pixels formed by groups of photosensitive elements is greater than the number of pixel detection results obtained in a single measurement. For example, if the number of pixels formed in the photosensitive array is 16, the computing and processing module in the embodiments of the present application can be configured with only 10 computing and processing units, and the number of pixel detection results obtained in a single measurement can also be 10. By reducing the number of computing units, computing resources can be effectively reduced, and device footprint and power consumption can also be lowered.

It should be noted that the above example is only an illustrative description and not a limitation of the relationship between the number of pixels in the photosensitive array and the number of pixel detection results. In practice, the design can be adjusted according to actual application requirements, and the present application does not impose specific restrictions on this.

Here, based on different application scenario requirements, different scanning modes can be preset. By utilizing the combination of selecting photosensitive elements corresponding to pixels and their positional offsets in different scanning operations within the batch scanning, the detection results from multiple scans can be superimposed to achieve the detection effects required for different application scenarios.

It is understandable that the function of the aforementioned data selection module 32 is to, according to the current scanning mode of the radar system, transmit the sampling data output by the target pixels corresponding to each scanning operation to the computing and processing module 33. That is, for each scanning operation, it determines which pixels' output sampling data should be selected for output to the subsequent computing and processing module 33.

In specific applications, different scanning modes can be set for different application scenario requirements. The correspondence between application scenario requirements and scanning modes can be preset. In practical application, the corresponding scanning mode is selected based on the application scenario requirements to control the radar system's scanning device for scanning.

The aforementioned application scenario requirements may include, but are not limited to: point cloud measurement results with uniformly distributed angular resolution; increasing point cloud density in a specified area to achieve high-resolution point cloud results; improving detection capability in a specified area to achieve enhanced detection range and detection rate.

In some implementations, corresponding scanning modes can be preset for different application scenario requirements. Under different scanning modes, the pixel grouping, and the position and quantity of photosensitive elements corresponding to pixels in different scanning operations can vary, thereby achieving different detection effects.

The following describes the scanning modes provided by the embodiments of the present application and their corresponding application scenario requirements:

### Scanning Mode 1:

In this scanning mode, in each scanning operation, only pixels within a selected area are activated for scanning. The activated pixels within the selected area can acquire corresponding sampling data, while pixels outside the selected area are not activated. The radar system performs cyclic scanning. Within each cyclic scanning round, the selected areas activated in different scanning operations do not overlap, and the selected areas activated in different scanning operations within the cyclic scanning round cover all pixel positions in the detection field of view. The offsets of pixel positions in the horizontal direction for different scanning operations can be consistent or inconsistent.

It should be noted that the radar system performs cyclic scanning during the scanning process. A cyclic scanning round refers to the number of scanning operations included in one cycle.

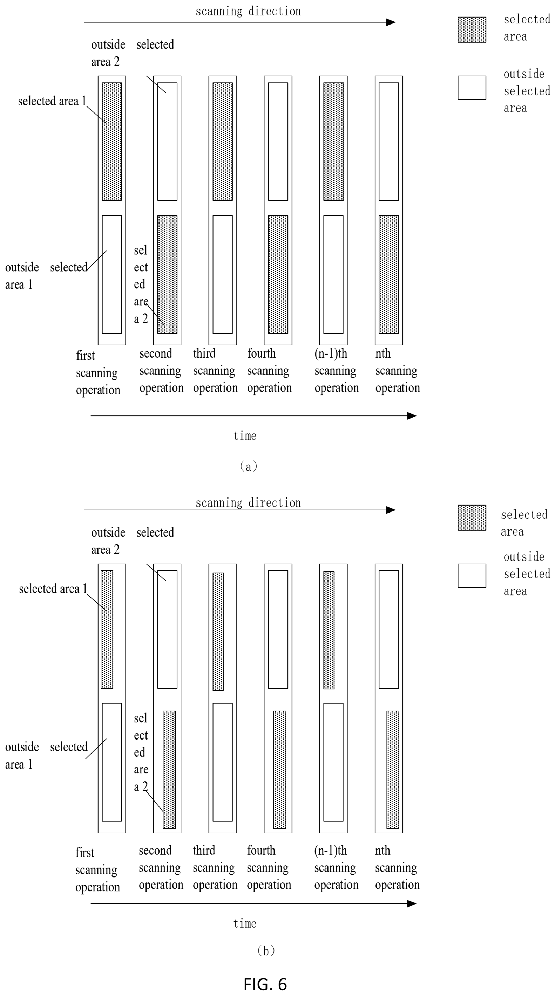

Exemplarily, please refer to FIG. 6, which illustrates the process of photosensitive elements being activated along with scanning in scanning mode 1 provided by an embodiment of the present application. Taking a cyclic scanning round of 2 times as an example, the aforementioned scanning mode 1 is exemplarily described. As shown in FIG. 6, during the first scanning operation, pixels within selected area 1 are activated, while pixels outside selected area 1 are not activated. During the second scanning operation, pixels within selected area 2 are activated, while pixels outside selected area 2 are not activated. The pixels within selected area 1 correspond to pixels outside selected area 2, and pixels outside selected area 1 correspond to pixels within selected area 2. Selected area 1 and selected area 2 cover all pixels in the detection field of view.

In the example shown in FIG. 6, the first and second scanning operations constitute one cyclic scanning round, and the third and fourth scanning operations constitute another cyclic scanning round. That is, the selected area activated in the first scanning operation is the same as that in the third scanning operation, and the selected area activated in the second scanning operation is the same as that in the fourth scanning operation.

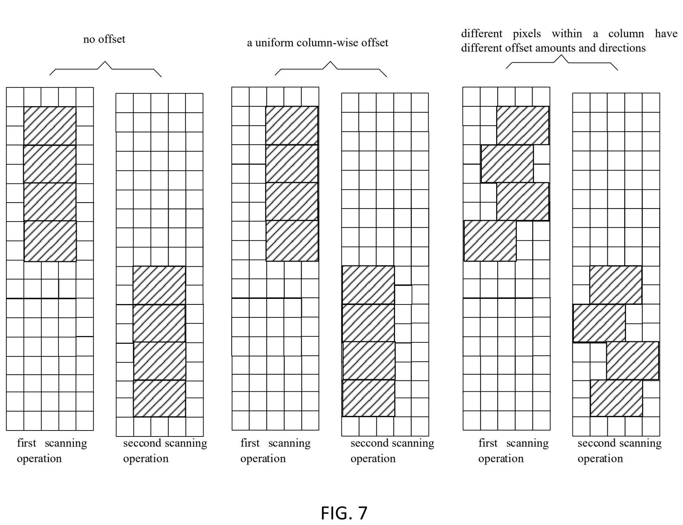

In practical applications, the activated pixels within the selected area in each scanning operation can be offset in the H direction of the photosensitive array. For example, the offset can be a uniform column-wise offset as shown in FIG. 7, where the offset amount and direction are the same for all pixels, or it can be as shown in FIG. 7 where different pixels within a column have different offset amounts and directions.

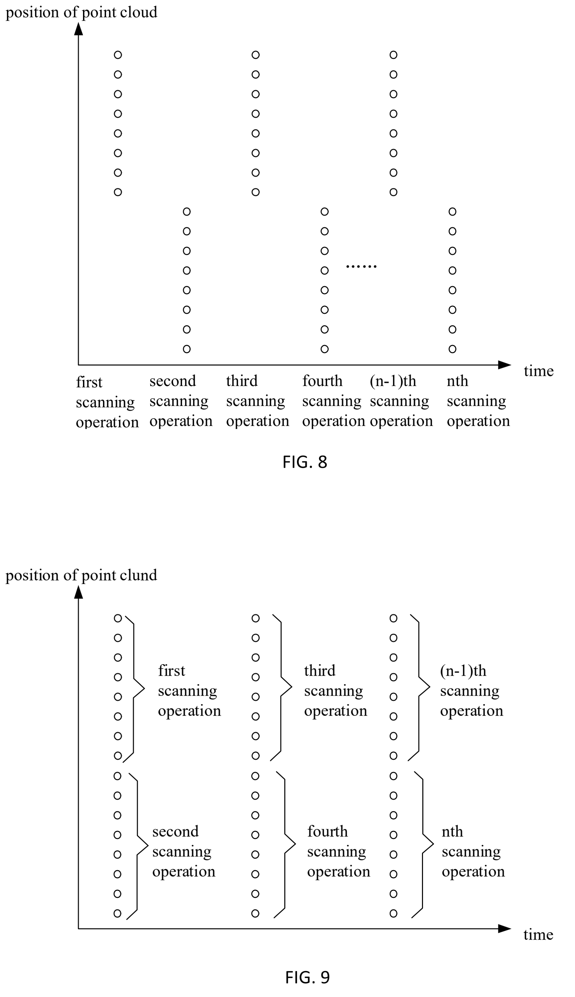

FIG. 8 shows a schematic diagram of the point cloud distribution output by the computing and processing module 33 after scanning using scanning mode 1. As shown in FIG. 8, by scanning with scanning mode 1, a point cloud measurement result covering all pixels can be obtained.

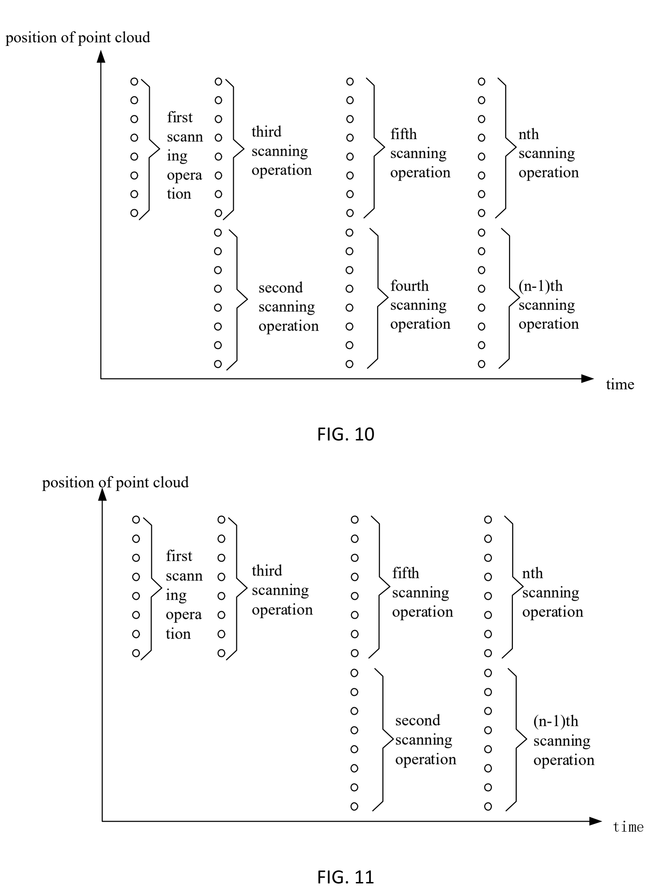

To align the point cloud of an entire column, the pixel offset amount for different scanning operations within a cyclic scanning round can be adjusted, for example, according to the method shown in FIG. 6, to obtain point cloud distribution diagrams as shown in FIGS. 9 to 11. Among them, differences in scanning cycle time, photosensitive element offset position, and speed of the rotating mechanism can lead to alignment of the point cloud for an entire column over different cyclic scanning operations. For example, in FIG. 9, the point cloud obtained from the first scanning operation and the point cloud obtained from the second scanning operation can achieve point cloud alignment. Similarly, in FIG. 10, the point cloud obtained from the second scanning operation and the point cloud obtained from the third scanning operation can achieve point cloud alignment. And in FIG. 11, the point cloud obtained from the second scanning operation and the point cloud obtained from the fifth scanning operation can achieve point cloud alignment.

### Scanning Mode 2:

In this scanning mode, in each scanning operation, only pixels within a selected area are activated for scanning. The activated pixels within the selected area can acquire corresponding sampling data, while pixels outside the selected area are not activated. Within each cyclic scanning round, the selected areas activated in different scanning operations partially overlap. The overlapping pixels in the overlapping area output corresponding sampling data in each scanning operation, and the selected areas activated in different scanning operations within the cyclic scanning round cover all pixel positions in the detection field of view. The offsets of pixel positions in the vertical direction for different scanning operations can be consistent or inconsistent.

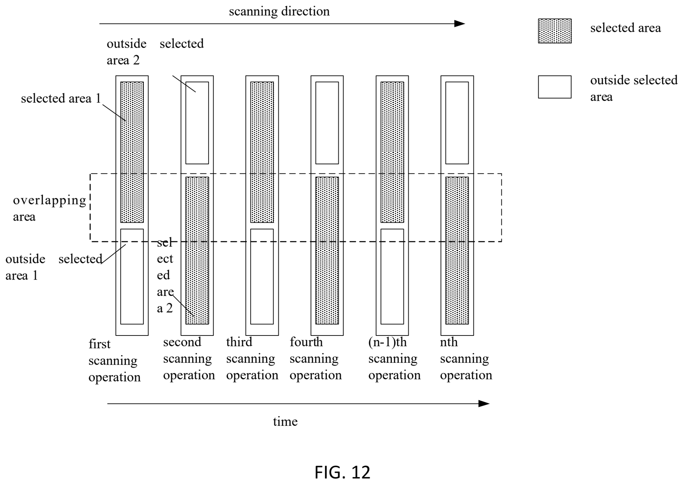

Exemplarily, as shown in FIG. 12, during the first scanning operation, pixels within selected area 1 are activated, while pixels outside selected area 1 are not activated. During the second scanning operation, pixels within selected area 2 are activated, while pixels outside selected area 2 are not activated. Selected area 1 and selected area 2 partially overlap, i.e., the overlapping area in FIG. 12.

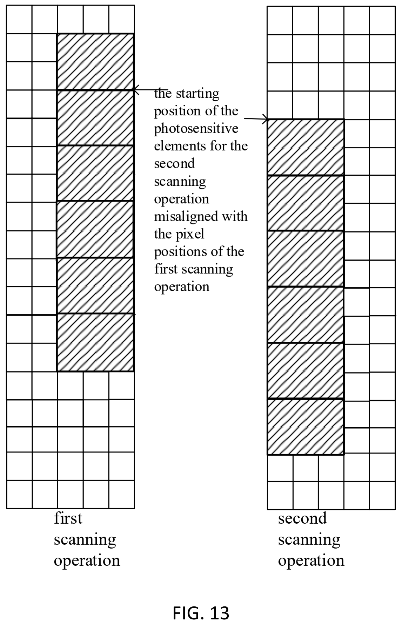

In some embodiments, within a cyclic scanning round, the starting positions of photosensitive elements of pixels in the vertical direction can be misaligned. For example, as shown in FIG. 13, the starting position of the photosensitive elements for the second scanning operation can be misaligned with the pixel positions of the first scanning operation, thereby forming an interlaced point cloud distribution in the vertical direction.

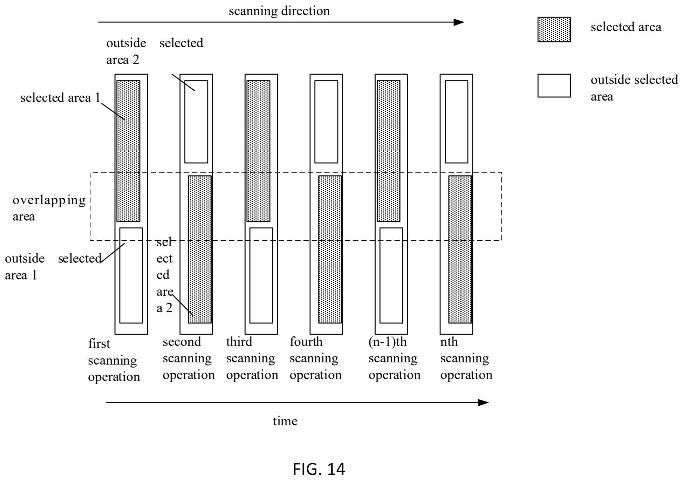

In practical applications, the activated pixels within the selected area in each scanning operation can be offset in the horizontal direction of the photosensitive array. For example, it can be offset as shown in FIG. 14. Thus, point clouds obtained from different scanning operations can be used to achieve alignment of the point cloud for an entire column.

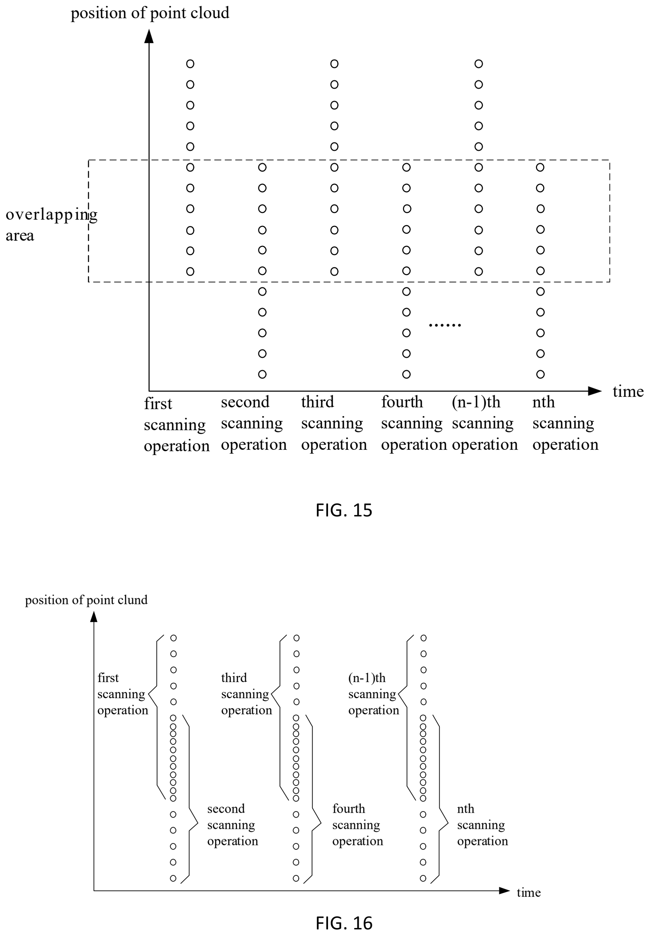

FIG. 15 shows a schematic diagram of the point cloud distribution output by the computing and processing module 33 after scanning using scanning mode 2. As shown in FIG. 15, by scanning with scanning mode 2, the point cloud density in the overlapping area can be effectively increased, thereby achieving a high-resolution point cloud.

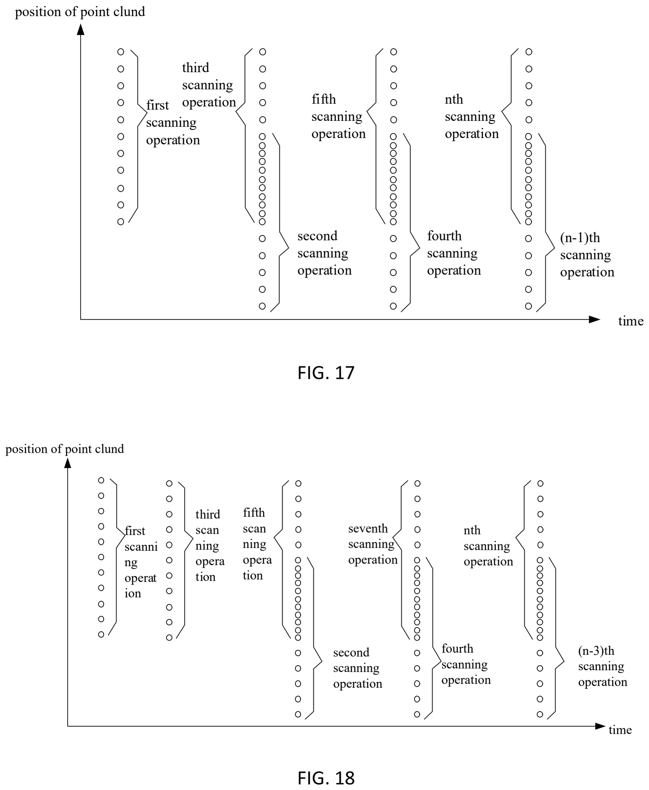

Similarly, by adjusting the pixel offset amount for different scanning operations within a cyclic scanning round, different point cloud distributions can be obtained. For example, point cloud distribution diagrams as shown in FIGS. 16 to 18 can be obtained. In FIG. 16, the point cloud obtained from the first scanning operation and the point cloud obtained from the second scanning operation can achieve point cloud alignment, and the point cloud density in the overlapping area is greater than that in the non-overlapping area. In FIG. 17, the point cloud obtained from the second scanning operation and the point cloud obtained from the third scanning operation can achieve point cloud alignment, and the point cloud density in the overlapping area is greater than that in the non-overlapping area. Also, in FIG. 18, the point cloud obtained from the second scanning operation and the point cloud obtained from the fifth scanning operation can achieve point cloud alignment, and the point cloud density in the overlapping area is greater than that in the non-overlapping area.

### Scanning Mode 3:

In this scanning mode, in each scanning operation, only pixels within a selected area are activated for scanning. The activated pixels within the selected area can acquire corresponding sampling data, while pixels outside the selected area are not activated. Within a cyclic scanning round, the selected areas activated in different scanning operations partially overlap. The number of photosensitive elements in the overlapping pixels is greater than the number of photosensitive elements in the non-overlapping pixels.

The selected areas activated in different scanning operations within the cyclic scanning round cover all pixel positions in the detection field of view. The offsets of pixel positions in the vertical direction for different scanning operations can be consistent or inconsistent.

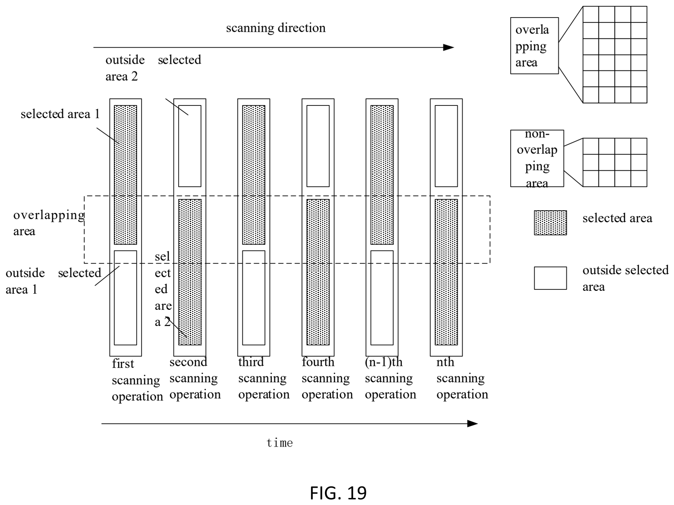

Exemplarily, as shown in FIG. 19, during the first scanning operation, pixels within selected area 1 are activated, while pixels outside selected area 1 are not activated. During the second scanning operation, pixels within selected area 2 are activated, while pixels outside selected area 2 are not activated. Selected area 1 and selected area 2 partially overlap, i.e., the overlapping area in FIG. 19. The number of photosensitive elements in the pixels within the overlapping area is greater than the number of photosensitive elements in the pixels in the non-overlapping area. For example, in FIG. 19, the number of photosensitive elements in the pixels within the overlapping area is 6 * 4, and the number of photosensitive elements in the pixels in the non-overlapping area is 3 * 4.

Specifically, the number of photosensitive elements of the overlapping pixels in the vertical direction is not equal to the number of photosensitive elements of the non-overlapping pixels in the vertical direction. The number of photosensitive elements of the overlapping pixels in the horizontal direction can be equal to or not equal to the number of photosensitive elements of the non-overlapping pixels in the horizontal direction. For example, in the instance shown in FIG. 19, the number of photosensitive elements of the overlapping pixels in the horizontal direction is 4, and the number of photosensitive elements of the non-overlapping pixels in the horizontal direction is also 4.

It is understandable that the number of photosensitive elements of the overlapping pixels in the vertical direction being greater than that of the non-overlapping pixels enables better detection performance in the overlapping area, i.e., targets at farther distances can be detected. The non-overlapping areas have fewer photosensitive elements, which can be used for areas that require detection of closer distances.

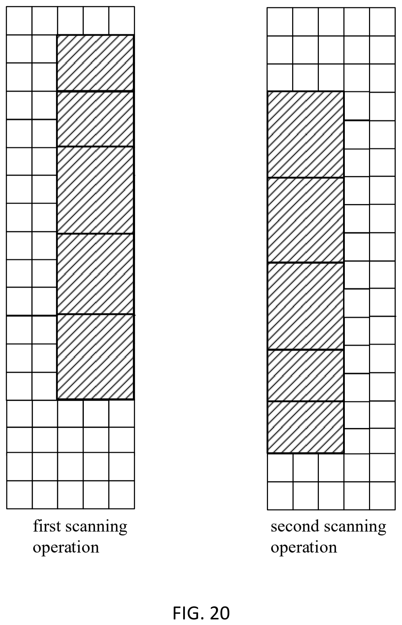

Exemplarily, please refer to FIG. 20. Within a cyclic scanning round, the number of photosensitive elements of the pixels in the overlapping area corresponding to each scanning operation can be the same. That is, the number of photosensitive elements of the pixels in the overlapping area in the first scanning operation is equal to that in the second scanning operation, both being 4 * 3. For each scanning operation, the positions of the selected photosensitive elements in the vertical direction can be inconsistent, i.e., arranged in an interleaved manner.

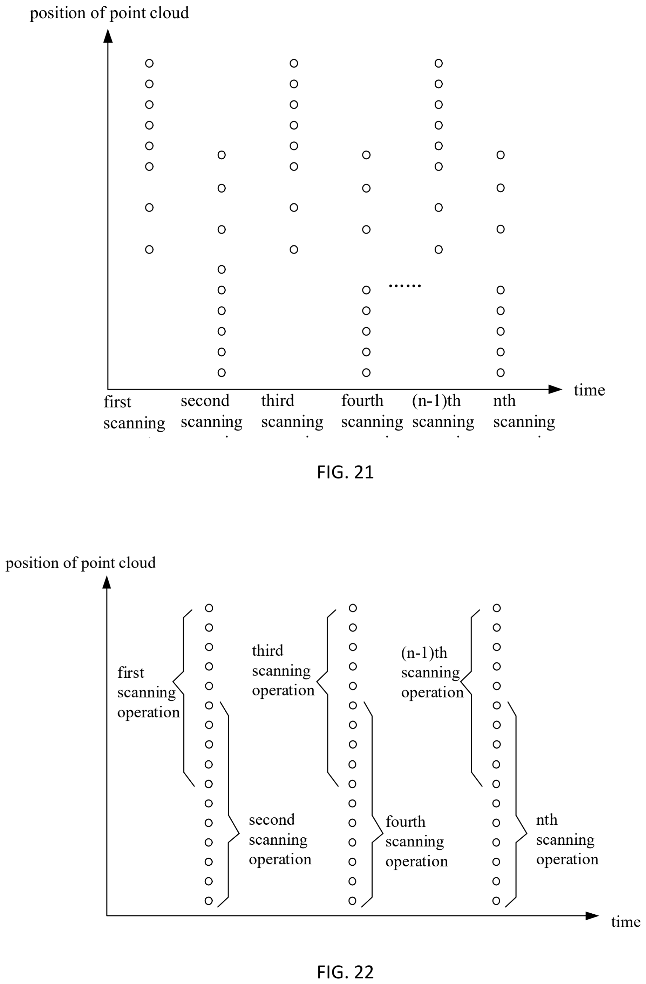

The positions of the photosensitive elements used by each pixel in the horizontal direction for adjacent scanning operations (in the case of a cyclic scanning round of 2) can also be inconsistent. In practical application, by adjusting the positions of the photosensitive elements selected for the pixels in the horizontal direction, alignment of the number of points for an entire column can be achieved. Unlike the case without overlapping areas, this scanning mode enables the overlapping area to obtain an effective number of pixel point clouds with uniform angular resolution. FIG. 21 shows the point cloud distribution obtained by scanning mode 3 provided by an embodiment of the present application.

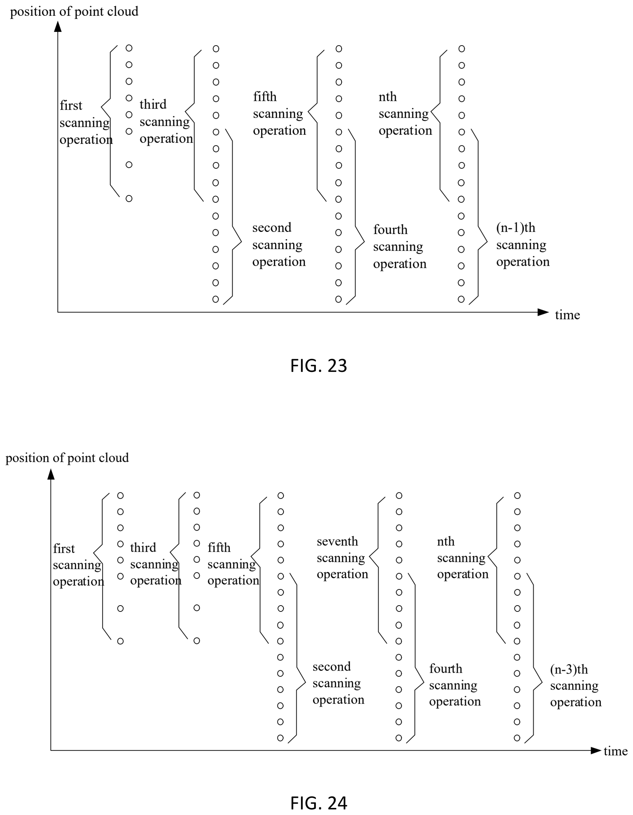

Similarly, by adjusting the pixel offset amount for different scanning operations within a cyclic scanning round, different point cloud distributions can be obtained. For example, point cloud distribution diagrams as shown in FIGS. 22 to 24 can be obtained. In FIG. 22, the point cloud obtained from the first scanning operation and the point cloud obtained from the second scanning operation can achieve point cloud alignment, and an effective number of pixel point clouds with uniform angular resolution can be obtained. Moreover, the detection capability in the overlapping area is stronger. In FIG. 23, the point cloud obtained from the second scanning operation and the point cloud obtained from the third scanning operation can achieve point cloud alignment, and an effective number of pixel point clouds with uniform angular resolution can be obtained. Moreover, the detection capability in the overlapping area is stronger. Also, in FIG. 24, the point cloud obtained from the second scanning operation and the point cloud obtained from the fifth scanning operation can achieve point cloud alignment, and an effective number of pixel point clouds with uniform angular resolution can be obtained. Moreover, the detection capability in the overlapping area is stronger.

The above provides illustrative descriptions of the basic scanning modes provided by the embodiments of the present application. The examples above are described taking a cyclic scanning round of 2, i.e., the first and second scanning operations constitute one cyclic scanning round, after which the radar system starts cyclic scanning. It is understandable that the cyclic scanning round is not limited to 2 times; a cyclic scanning round can also include multiple scanning operations, such as the first, second, and third scanning operations, etc. Different designs of cyclic scanning rounds can be achieved through different arrangements of pixels in each column in different scanning operations.

It is also understandable that the three scanning modes provided above can also be used in combination. For example, for a specified area, scanning mode 2 can be used to improve resolution, and scanning mode 3 can also be used to improve detection range.

It should also be noted that, in the above various embodiments, the number of photosensitive elements included in a pixel is merely an example and not a limitation. The number of photosensitive elements included in a pixel can be set according to actual application requirements.

It is also understandable that when the radar system scans the entire field of view, it can also use a scanning method that combines the above multiple scanning modes. For example, for edge detection areas, scanning mode 1 can be used for scanning; for center detection areas, a combination of scanning mode 1 and scanning mode 2 can be used for scanning, achieving scanning with uniformly distributed angular resolution for edge detection areas, and high-resolution scanning and high detection range scanning for center detection areas.

In specific applications, the data selection module 32 can determine the target pixels to be activated in each scanning operation according to the current scanning mode corresponding to the current detection area, select the sampling data output by the target pixels, and transmit the sampling data output by the target pixels to the aforementioned computing and processing module.

In specific applications, the aforementioned data selection module can include data selectors. A data selector acts as a controller for the data transmission path between a pixel and the computing and processing module 33. The data selector can determine which pixels are to be activated in the current scanning operation according to the scanning mode, i.e., determine the target pixels, and then control the data transmission path between the target pixels and the computing and processing module 33 to be turned on, thereby transmitting the sampling data output by the target pixels to the computing and processing module 33.

The computing and processing module 33 can perform echo data processing and calculation on the sampling data output by each target pixel to obtain the pixel detection result (i.e., the aforementioned point cloud) corresponding to each target pixel.

In some implementations, the aforementioned computing and processing module 33 can process the sampling data output by the target pixels selected by the data selection module through corresponding computing and processing units, thereby obtaining the pixel detection results corresponding to each target pixel. That is, the aforementioned computing and processing module 33 can include multiple computing and processing units. Each computing and processing unit can perform data processing and analysis on the sampling data output by the corresponding target pixel. That is, the data selection module 32 can input the sampling data output by the target pixels into the corresponding computing and processing units for processing, so that the computing and processing units output the pixel detection results of the corresponding target pixels.

It is understandable that the number of computing and processing units corresponds to the number of target pixels that need to be output. In other words, when designing the LIDAR, the number of computing and processing units needs to be greater than or equal to the maximum number of target pixels corresponding to all application scenarios. For example, assuming the number of pixels received in parallel in the center detection area is greater than that in the edge detection area, the number of computing and processing units must be greater than or equal to the number of target pixels received in parallel in the center detection area.

In practical application, during scanning, to achieve different detection effects, the overlap degree of different overlapping areas can vary. For example, the overlap degree of the center detection area can be greater than that of the edge detection area. For scanning areas with different overlap degrees, areas with higher overlap degrees require higher scanning frequencies, and therefore require a greater number of parallel scanning channels. The number of target pixels that need to be output is also larger, meaning the corresponding number of required computing and processing units is also greater. Therefore, when designing the LIDAR, the number of computing and processing units must be greater than or equal to the number of target pixels corresponding to the scanning area with the highest overlap degree.

It is also understandable that the larger the scanning gap of the radar, the lower the density of scanning tasks. In this case, the number of parallel channels of the radar can also be reduced. A reduction in the number of parallel channels can also correspond to a reduction in the number of computing and processing units.

The aforementioned pixel detection results include, but are not limited to, distance, echo intensity, echo area value, reflectivity, and echo pulse width.

It should be noted that the calculation methods for the aforementioned distance, echo intensity, echo area value, reflectivity, and echo pulse width can be implemented based on existing calculation methods, which are not elaborated in this application.

It can be seen that the signal receiving apparatus provided by the embodiments of the present application, by configuring different arrangements of pixels in the photosensitive array under different scanning modes, and utilizing the point cloud obtained from multiple scans, can meet requirements such as uniform resolution distribution, high-resolution detection in specified areas, and high detection performance in specified areas. This achieves improved resolution, enhanced ranging ability, and an increased detection rate in specified areas while using fewer computing resources.

In an embodiment of the present application, each photosensitive element 311 in the activated pixels (i.e., the target pixels) will collect electrical signals. The sampling data of a pixel can be obtained by superimposing the data collected by the photosensitive elements 311 within the pixel.

It is understandable that the aforementioned data selection module 32 can output the sampling data from different pixels serially through a single data selector. The above-mentioned implementation of parallel output of the required sampling data from different pixels by setting a data selector array including multiple data selectors is only an example and not a limitation. In practical applications, the setup of data selectors can be chosen based on radar performance requirements and cost requirements. The present application does not impose specific restrictions on this.

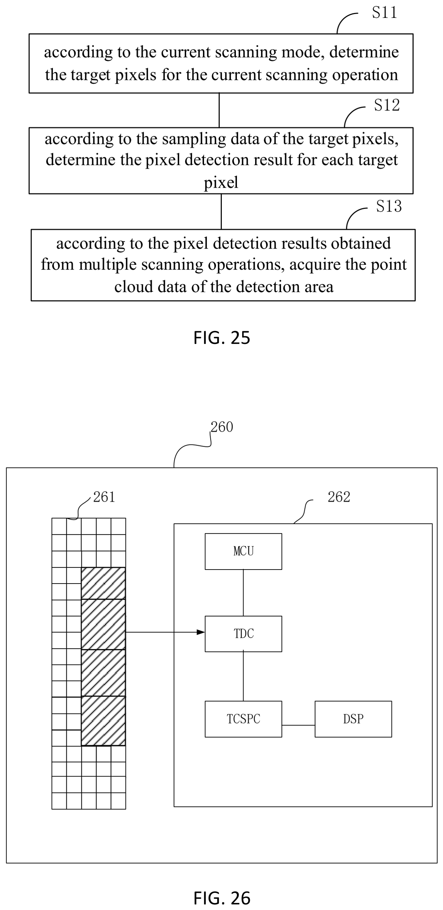

The above provides a detailed description of the signal receiving apparatus provided by the embodiments of the present application. Next, combined with the signal receiving apparatus provided in the above embodiments, a detailed description of the signal processing method provided by the embodiments of the present application is given:
Please refer to FIG. 25, which shows a schematic flowchart of an implementation of a signal processing method provided by an embodiment of the present application. As shown in FIG. 25, the signal processing method may include the following steps:
It should be noted that the execution entity of the signal processing method provided by the embodiments of the present application can be the aforementioned signal receiving apparatus, specifically the data selection module and the computing and processing module of the signal receiving apparatus. Of course, it can also be a separately set data processing module. The present application does not impose specific restrictions on this.

In S11, according to the current scanning mode, determine the target pixels for the current scanning operation.

In specific applications, the radar scans according to the set scanning mode. That is, in each scanning operation, the pixels within the corresponding selected area of the scanning mode are activated for photosensitive reception, and the number and position of photosensitive elements included in the pixels can be set according to the pixel position settings corresponding to the scanning mode. Therefore, based on the current scanning mode, the pixels to be activated in the current scanning operation, i.e., the target pixels, can be determined.

In some embodiments, different scanning modes can be set for different detection areas. Therefore, the data selection module can determine the target pixels for the current scanning operation according to the scanning mode corresponding to the current detection area.

The scanning mode in the embodiments of the present application can be any one of the aforementioned three scanning modes, or a combination of any two of the three scanning modes, or a combination of all three scanning modes.

Of course, when the radar is performing detection, it can also use only one scanning mode without distinguishing detection areas. The present application does not impose a unique limitation on this.

Regarding which pixels are activated in a scanning operation under different scanning modes, please refer to the description of the scanning modes in the previous embodiment. This application will not repeat it here.

In S12, according to the sampling data of the target pixels, determine the pixel detection result for each target pixel.

In specific applications, for the sampling data output by each target pixel, a computing and processing unit corresponding to that target pixel can be used for processing.

It is understandable that, in the embodiments of the present application, the number of computing and processing units is equal to the number of output pixel detection results, and the number of computing and processing units is less than the number of pixels in the photosensitive array. Within the scanning cycle of the radar, by grouping the receiving pixels, the target pixels corresponding to different scanning operations are different in each cyclic scanning round. Therefore, which computing and processing unit is responsible for processing the sampling data output by a target pixel can be determined by the data selection module. In other words, a computing and processing unit can process the sampling data output by different pixels in different scanning operations. This can effectively reduce the number of computing processing devices in the radar system, as well as effectively reduce the computing resources and power consumption of the radar system.

It is understandable that a mapping relationship between target pixels and computing and processing units can be preset in the data selection module, i.e., the mapping relationship of which computing and processing unit to use for echo data processing and calculation for a given target pixel.

In some embodiments, the data selection module can also randomly determine the mapping relationship between target pixels and computing and processing units, i.e., randomly connect target pixels to computing and processing units.

The aforementioned determining the pixel detection result for each target pixel according to the sampling data of the target pixels can specifically involve performing echo data processing and calculation on the sampling data to determine pixel detection results such as distance, echo intensity, echo area value, reflectivity, and echo pulse width.

In S13, according to the pixel detection results obtained from multiple scanning operations, acquire the point cloud data of the detection area.

In specific applications, since the pixel detection result obtained from each scanning operation is a partial point cloud in each column, the collection of pixel detection results obtained from multiple scanning operations can yield the aligned point cloud for the entire column. For the entire detection area, the method of combining multiple scans is used for detection, enabling the acquisition of point cloud data for the entire detection area.

It is understandable that the related content on how to align the pixel detection results (i.e., point clouds) obtained from multiple scanning operations in the vertical direction, i.e., obtaining the point cloud for an entire column, can be found in the above description of scanning modes. This application will not repeat it here.

It can be seen that the signal processing method provided by the embodiments of the present application can also, by configuring different arrangements of pixels in the photosensitive array under different scanning modes, and utilizing the point cloud obtained from multiple scans, meet requirements such as uniform resolution distribution, high-resolution detection in specified areas, and high detection performance in specified areas. This achieves improved resolution, enhanced ranging ability, and an increased detection rate in specified areas while using fewer computing resources.

It should be understood that the order of the steps in the above embodiments does not imply the order of execution. The execution order of each process should be determined by its function and internal logic, and should not constitute any limitation on the implementation process of the embodiments of the present application.

FIG. 26 is a structural schematic diagram of a LIDAR receiving chip 260 provided by another embodiment of the present application. As shown in FIG. 26, the LIDAR receiving chip 260 provided in this embodiment includes: a photosensitive array 261 and a system-on-chip 262. The photosensitive array 261 and the system-on-chip 262 are integrated on the receiving chip 260. The photosensitive array 261 can be, for example, a SPAD array; the system-on-chip 262 can be, for example, a system-on-chip (SOC). The system-on-chip 262 is electrically connected to the photosensitive array 261 and is configured to implement the steps in the signal processing method implementation embodiment described above, such as S11 to S13 shown in FIG. 24.

Specifically, the system-on-chip 262 includes a high-precision Time-to-Digital Converter (TDC), a Time-Correlated Single Photon Counting (TCSPC) engine, a dedicated Digital Signal Processor (DSP), and a LIDAR control center (Microcontroller Unit, MCU).

The photosensitive array and the system-on-chip can be connected via a hybrid bonding process. This process ensures that photosensitive signals can be quickly transmitted to the underlying chip for processing, thereby avoiding the data transmission bottleneck present in traditional discrete chip architectures.

The photosensitive array 261 includes a plurality of photosensitive elements. Groups of photosensitive elements in the photosensitive array form pixels, each pixel includes one or more photosensitive elements. The pixels receive echo light beams through internal photosensitive elements and convert the received light signals into current signals. The current signals are converted into digital signals by a front-end readout circuit, and are time-sampled by the TDC in the system-on-chip to record the time of flight of photons. The TCSPC module accumulates single-photon signals through multiple measurements to construct a data histogram, which is then processed by the ranging algorithm in the DSP to output corresponding detection results.

It is understandable that, when executing the signal processing method of the present application, the MCU of the system-on-chip can determine the target pixels for the current scanning operation according to the current scanning mode. The MCU sends control signals to cause the TDC to sample the target pixels, transmits the sampling data output by the target pixels to the TCSPC to construct a histogram, and transmits the constructed histogram to the DSP. The DSP of the system-on-chip processes and computes the sampling data output by the target pixels to obtain the detection results corresponding to the target pixels. It is understandable that through the signal processing method of the present application, by grouping the scans and performing scanning and signal output for different groups at different times, the number of computing and processing links on the SOC system can be effectively reduced while ensuring detection requirements. That is, corresponding TDCs, TCSPCs, and/or DSPs can be reduced, effectively reducing the computing power of the SOC, thereby lowering the power consumption and hardware cost of the SOC system, improving processing efficiency, and optimizing memory management, etc.

It is understandable that the scanning mode in the embodiments of the present application can be any one of the aforementioned three scanning modes, or a combination of any two of the three scanning modes, or a combination of all three scanning modes.

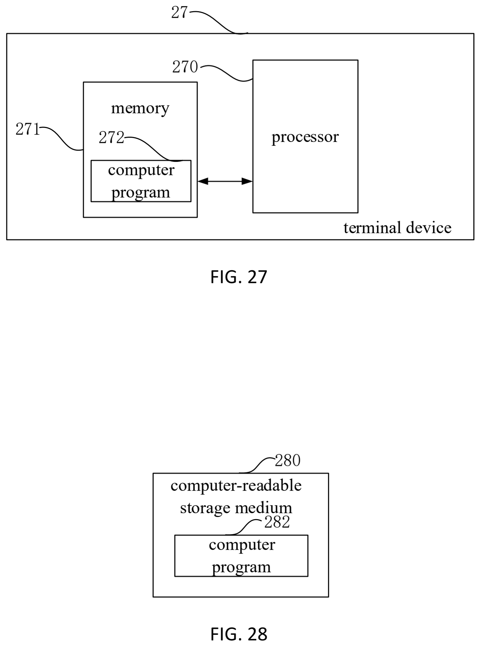

FIG. 27 is a structural schematic diagram of a terminal device provided by another embodiment of the present application. As shown in FIG. 26, the terminal device 27 provided in this embodiment includes: a processor 270, a memory 271, and a computer program 272 stored in the memory 271 and executable on the processor 270, for example, a signal processing program. The processor 270 executes the computer program 272 to implement the steps in the various signal processing method embodiments described above, such as S11 to S13 shown in FIG. 24.

Exemplarily, the computer program 272 can be divided into one or more modules/units. The one or more modules/units are stored in the memory 271 and executed by the processor 270 to complete the present application. The one or more modules/units can be a series of computer program instruction segments capable of performing specific functions. The instruction segments are used to describe the execution process of the computer program 272 in the terminal device 27.

The terminal device may include, but is not limited to, the processor 270 and the memory 271. Those skilled in the art can understand that FIG. 27 is only an example of the terminal device 27 and does not limit the terminal device 27. It may include more or fewer components than those shown, or combine some components, or have different components. For example, the terminal device may also include input/output devices, network access devices, buses, etc.

The processor 270 may be a Central Processing Unit (CPU), or other general-purpose processors, Digital Signal Processors (DSP), Application Specific Integrated Circuits (ASIC), Field-Programmable Gate Arrays (FPGA) or other programmable logic devices, discrete gate or transistor logic devices, discrete hardware components, etc. A general-purpose processor may be a microprocessor, or the processor may be any conventional processor, etc.

The memory 271 may be an internal storage unit of the terminal device 27, such as a hard disk or memory of the terminal device 26. The memory 271 may also be an external storage device of the terminal device 26, such as a plug-in hard disk equipped on the terminal device 27, a Smart Media Card (SMC), a Secure Digital (SD) card, a Flash Card, etc. Furthermore, the memory 271 may include both the internal storage unit of the terminal device 27 and an external storage device. The memory 271 is used to store the computer program and other programs and data required by the terminal device. The memory 271 may also be used to temporarily store data that has been output or is to be output.

The embodiments of the present application also provide a computer-readable storage medium. Please refer to FIG. 28. FIG. 28 is a structural schematic diagram of a computer-readable storage medium provided by an embodiment of the present application. As shown in FIG. 27, a computer program 282 is stored in the computer-readable storage medium 280. When the computer program 282 is executed by a processor, it can implement the aforementioned signal processing method.

The embodiments of the present application provide a computer program product. When the computer program product runs on a terminal device, it causes the terminal device to implement the aforementioned signal processing method.

The embodiments of the present application also provide a radar system, which includes the signal receiving apparatus described above. The signal receiving apparatus can also be referred to as a receiving module.

Those skilled in the art can clearly understand that, for the convenience and brevity of description, the division of the above functional units and modules is only an example. In practical applications, the above functions can be assigned to be completed by different functional units and modules as needed. That is, the internal structure of the terminal device is divided into different functional units or modules to complete all or part of the functions described above. The functional units and modules in the embodiments can be integrated into one processing unit, or each unit can exist physically separately, or two or more units can be integrated into one unit. The above integrated units can be implemented in the form of hardware or software functional units. In addition, the specific names of the functional units and modules are only for the convenience of distinguishing them from each other and are not intended to limit the protection scope of the present application. For the specific working process of the units and modules in the above system, reference can be made to the corresponding process in the foregoing method embodiments, which will not be repeated here.

In the above embodiments, the descriptions of the various embodiments have their own emphases. For parts not described in detail or recorded in a certain embodiment, reference can be made to the relevant descriptions in other embodiments.

Those of ordinary skill in the art can appreciate that the units and algorithm steps of the examples described in combination with the embodiments disclosed herein can be implemented in electronic hardware, or a combination of computer software and electronic hardware. Whether these functions are performed in hardware or software depends on the specific application and design constraints of the technical solution. Professionals can use different methods for each specific application to implement the described functions, but such implementation should not be considered beyond the scope of the present application.

The above embodiments are only used to illustrate the technical solutions of the present application and are not intended to limit them. Although the present application has been described in detail with reference to the foregoing embodiments, those of ordinary skill in the art should understand that they can still modify the technical solutions recorded in the foregoing embodiments or equivalently replace some of the technical features. These modifications or replacements do not cause the essence of the corresponding technical solutions to deviate from the spirit and scope of the technical solutions of the embodiments of the present application, and all should be included within the protection scope of the present application.

## Claims

1. A signal receiving apparatus, comprising:
a photosensitive array, wherein the photosensitive array comprises a plurality of photosensitive elements, groups of photosensitive elements in the photosensitive array form pixels, each pixel comprises one or more photosensitive elements; the pixels receive echo light beams through internal photosensitive elements and output corresponding sampling data;
a data selection module, connected to the photosensitive array, configured to determine target pixels for outputting sampling data in each scanning operation according to a current scanning mode of a radar system; and transmit the sampling data output by the target pixels to a computing and processing module; wherein a number of the target pixels is less than a number of pixels in the photosensitive array, and the number of the target pixels is determined according to the current scanning mode;
the computing and processing module, connected to the data selection module, configured to process and compute the sampling data output by the target pixels to obtain pixel detection results corresponding to the target pixels; wherein, in each scanning operation, the data selection module only selects sampling data output by a portion of the pixels in the photosensitive array to be transmitted to the computing and processing module.

2. The signal receiving apparatus according to claim 1, wherein the computing and processing module comprises a plurality of computing and processing units, and the number of the computing and processing units is less than the number of pixels in the photosensitive array.

3. The signal receiving apparatus according to claim 1 or 2, wherein the data selection module comprises a data selector array, the data selector array comprises a plurality of data selectors, each of the data selectors selects to turn on or turn off a data transmission path between a pixel and the computing and processing module according to the current scanning mode of the radar system.

4. The signal receiving apparatus according to any one of claims 1 to 3, wherein the number of photosensitive elements in the group of photosensitive elements corresponding to a pixel in an edge detection area is less than the number of photosensitive elements in the group of photosensitive elements corresponding to a pixel in a center detection area.

5. The signal receiving apparatus according to any one of claims 1 to 4, wherein the scanning mode of the radar system comprises:
controlling the radar system to perform cyclic scanning, wherein in each scanning operation, only pixels within a selected area are activated for scanning, the activated pixels within the selected area acquire corresponding sampling data, and pixels within a non-selected area are not activated; within each cyclic scanning round, selected areas activated in different scanning operations do not overlap, and the selected areas activated in different scanning operations within the cyclic scanning round cover all pixel positions of a detection field of view.

6. The signal receiving apparatus according to claim 5, wherein, within the cyclic scanning round, pixel positions in different scanning operations have an offset in a horizontal direction.

7. The signal receiving apparatus according to any one of claims 1 to 4, wherein the scanning mode of the radar system comprises:
controlling the radar system to perform cyclic scanning, wherein in each scanning operation, only pixels within a selected area are activated for scanning, the activated pixels within the selected area acquire corresponding sampling data, and pixels within a non-selected area are not activated; within each cyclic scanning round, selected areas activated in different scanning operations partially overlap, the overlapping pixels in the overlapping area output corresponding sampling data in each scanning operation, and the selected areas activated in different scanning operations within the cyclic scanning round cover all pixel positions of a detection field of view.

8. The signal receiving apparatus according to claim 7, wherein, within the cyclic scanning round, pixel positions in different scanning operations have an offset in a vertical direction.

9. The signal receiving apparatus according to any one of claims 1 to 4, wherein the scanning mode of the radar system comprises:
controlling the radar system to perform cyclic scanning, wherein in each scanning operation, only pixels within a selected area are activated for scanning, the activated pixels within the selected area acquire corresponding sampling data, and pixels within a non-selected area are not activated; within each cyclic scanning round, selected areas activated in different scanning operations partially overlap, the overlapping pixels in the overlapping area output corresponding sampling data in each scanning operation, the number of photosensitive elements of the overlapping pixels is greater than the number of photosensitive elements of non-overlapping pixels, and the selected areas activated in different scanning operations within the cyclic scanning round cover all pixel positions of a detection field of view; wherein the number of photosensitive elements of the overlapping pixels in the vertical direction is greater than the number of photosensitive elements of the non-overlapping pixels in the vertical direction.

10. A signal processing method applied to the signal receiving apparatus according to any one of claims 1 to 9, comprising:
determining target pixels for a current scanning operation according to a current scanning mode;
determining a pixel detection result for each of the target pixels according to sampling data of the target pixels; and
acquiring point cloud data of a detection area according to the pixel detection results obtained from multiple scanning operations.

11. The signal processing method according to claim 10, wherein different scanning modes are set for different detection areas, and the determining target pixels for a current scanning operation according to a current scanning mode comprises:
acquiring a scanning mode of a current detection area; and
determining the target pixels corresponding to the current scanning operation according to the scanning mode of the current detection area;
wherein the determining a pixel detection result for each of the target pixels according to sampling data of the target pixels comprises:
determining a computing and processing unit corresponding to a target pixel according to a mapping relationship between the target pixels and the computing and processing units; and
inputting the sampling data output by the target pixel into the computing and processing unit corresponding to the target pixel for processing and calculation, to obtain the pixel detection result of the target pixel.

12. A receiving chip for a lidar, comprising:
a photosensitive array, wherein the photosensitive array comprises a plurality of photosensitive elements, groups of photosensitive elements in the photosensitive array form pixels, each pixel comprises one or more photosensitive elements; the pixels receive echo light beams through internal photosensitive elements and output corresponding sampling data;
a system-on-chip, connected to the photosensitive array, configured to implement a signal processing method according to claim 10 to 11.

13. A radar system comprises a signal receiving apparatus according to any one of claims 1 to 9.

14. A terminal device, comprising a memory, a processor, and a computer program stored in the memory and executable on the processor, wherein, when the processor executes readable instructions of the computer program, a signal processing method according to claim 10 to 11 is implemented.

15. A computer-readable storage medium storing a computer program, wherein, when readable instructions of the computer program are executed by a processor, a signal processing method according to claim 10 to 11 is implemented.
